# EUROPEAN PATENT APPLICATION

(11) **EP 4 492 231 A1**
(43) Date of publication of application: **15.01.2025**
(21) Application number: 24187838.8
(22) Date of filing: 10.07.2024
(51) Int. Cl.: G06F 9/46

(54) **CODESHIELD - A SCALABLE, PERFORMANT AND SECURE EXECUTION ENVIRONMENT FOR CUSTOM CODE**

(30) Priority: 12.07.2023 US 202363526312 P; 02.07.2024 US 202418761833
(71) Applicant: Dynatrace LLC, Waltham, MA 02451 (US)
(72) Inventor: BAUMGARTNER, Stefan, 4020 Linz (AT)
(74) Representative: Bittner, Thomas L.

(57) **Abstract**

A technology is disclosed for the managed execution of custom scripting code that interacts with services provided by a service provider, where the service provider also provides the environment for the managed code execution. The managed execution environment separates functionality that perform interactions with underlying operating system functionality, like access to remote resources from functionality related to the execution of scripting code. To isolate the state of consecutive script executions while maintaining short startup times and high throughput of the managed execution environment, only functionality related to script execution is discarded after individual executions and functionality related to operation system interaction is reused for multiple executions. Security management, like maintaining access tokens or restricting access to external resources is performed in parts of the execution environment that are protected from undesired access or manipulations by execution of custom scripting code.

## Description

### Field

The disclosure is directed to the provision of a scalable and secure and platform independent execution environment for not curated custom code notated in scripting languages like JavaScript. The execution environment is split into two layers, a lower layer implemented in a rigid, native language that is immune against most attacks directed to scripting languages, and that also hides details of underlying infrastructure, and an upper layer implemented in the desired scripting language to enable execution of custom scripting code, and a controlled interaction of the custom scripting code with underlying resources and functionality. Isolation of individual script executions, while maintaining high performance and fast startup times, is achieved by discarding the upper layer of the execution environment after each execution and keeping the lower layer for multiple, consecutive executions.

### Background

Providers of data intensive services, like application monitoring providers, generate and store enormous amounts of valuable customer specific data, e.g., describing structure and dependencies of computing infrastructures operated by those customers, resource consumption of those computing infrastructures, or activities performed in those infrastructures. Service providers can only provide a limited set of services that exploit the gathered customer data for a specific purpose. It is not possible to fully exploit the gathered data or to anticipate all possible usage forms of the gathered data at or before acquisition time.

To enable customers to fully exploit their data, service providers enrich their portfolio with means to provide customers direct access to their data and to run their customer specific processing and analysis functionality on their data. Those "app frameworks" enable customers to specify code, typically in a popular scripting language, like JavaScript, which is executed in a secluded execution environment that provides controlled access to customer data.

As original service provider functionality, and also storage of customer data is typically performed in cloud environments, it is reasonable to also provide such "app framework" functionality using a cloud environment. Major cloud infrastructure providers, also known as "Hyperscalers", like Amazon AWS^{®} by Amazon, Microsoft Azure^{®} by Microsoft or Google Cloud Platform from Google, already provide functionality for the distributed, elastic execution of arbitrary code in a serverless fashion, like AWS Lambda or Azure Functions.

However, this existing functionality has some properties that prohibit its direct usage to implement the desired "app framework" functionality.

First, this functionality is highly cloud-vendor specific, and it is difficult and laborious to migrate functionality implemented for one cloud vendor to another. It is desired to equip "app framework" functionality with functionality that abstracts from cloud vendor specifics, to enable custom specific code to be executed on different cloud environments, without the need to adapt the custom code.

Second, the customer data that is accessed by customer specific code that is executed in "app framework" environments is considered sensible and requires protection. Although cloud computing environments provide means to implement data security and access control, implementing those security measures is mostly left to the executing code, only access to or usage of cloud provider resources, like individual cloud instances is protected out of the box. An "app framework" should provide an execution environment that performs protection of customer data in an automated fashion that is independent of customer code.

Third, access to customer data typically varies, depending on the context in which customer data is executed. During test and development, customer code may be executed locally on the machine of a developer, and during productive usage, it may be executed in a specific cloud infrastructure environment. From the point of view of executing customer code, access to customer data should be identical in both situations. Differences in data locations need to be handled by "app framework" functionality.

Finally, cloud environments try to improve execution performance and throughput by reusing execution environments for multiple execution requests. As an example, a container instance may be started which in turn starts a script execution environment like, for JavaScript, a Node.js instance (server-side execution environment for JavaScript) that also loads a custom script for execution. Each time a request to execute the custom code is received, this request is forwarded to this instance to perform the execution. This improves response time and execution throughput, as intensive container startup and script execution environment (Node.js) startup is only performed for the first execution request.

Scripting languages like JavaScript are highly adaptable and flexible, and even enable the change of scripting code during runtime. Scripting code is loaded into memory managed by an execution context for the scripting language and transformed into a format for execution. The scripting language provides means to manipulate this execution format of the code that exists in the memory of the execution context. If the execution context is reused for the sequential execution of multiple scripts, the executions of scripts that are performed later are affected by changes to memory representations of code performed by earlier script executions. Although this is a valuable feature, it also enables fraudulent code to change common functionality in an adverse way. As an example, a first execution may change logging functionality in a way that log messages are sent to a malicious receiver. As this logging functionality is not part of custom code, but part of "framework code" that is reused for multiple execution requests, also subsequent script executions performed by the affected execution instance are affected by this code change.

An "app framework" should provide an execution environment that prevents such "state dissemination" between different execution runs, while still maintaining short execution response times and high execution throughput.

Consequently, an execution environment for not curated custom code, which assures secure access to customer data and also securely isolates individual code execution, while still being performant and providing fast startup times, is required in the art.

This section provides background information related to the present disclosure which is not necessarily prior art.

### Summary

This section provides a general summary of the disclosure, and is not a comprehensive disclosure of its full scope or all of its features.

A managed execution environment and a method for managing an execution environment are provided according to the independent claims.

The disclosed technologies are directed to a high-performant, scalable and secure execution environment for arbitrary customer-designed code that is notated in a dynamic scripting language like JavaScript. Such languages provide a significant improvement for developer productivity due to their flexibility and their typically relaxed typing systems, but these advantages make such languages also vulnerable to fraudulent code changes. As an example, fraudulent code could overwrite logging functionality in a code execution context in a way that logged data is forwarded to a treacherous listener. If innocent code is afterwards executed in this execution context and uses the logging feature, all its potentially secure logging data is disclosed to fraudulent actors.

Such potential vulnerabilities may be counteracted by discarding and renewing the execution environment of the scripting language after each execution, but a teardown and restart of the complete process/container environment providing the scripting language execution environment introduces prohibitive performance penalties.

To reach immunity against such types of attacks while still maintaining good execution performance, the proposed technology takes advantage of features of modern script language execution environments, like the V8 JavaScript execution engine, which separates core language functionality and interaction with underlying processes/operating systems from isolation spaces or contexts that are directed to the actual execution of individual script programs and that also maintain all state data that is generated by this execution. To separate the state of individual executions from each other, it is sufficient to delete isolation spaces/contexts after each script execution and generate a new one for each started script execution.

In addition to separate the states of individual script executions to protect scripts from each other, another goal of the proposed technology is to ease interaction of scripts with other components and also improve the safety of those interactions. A first objective in this area is the interaction with so called platform services.

Platform services are provided by the same vendor that also provides the execution environment for the executed scripts, providers of to be executed scripts are typically customers of these vendors, and platform services typically provide data related to those customers. This way, customer specific scripts may be processed and analyzed in customer specific ways that were not anticipated and prepared by the platform service provider.

To ease interaction with platform services, the script language execution environment is augmented with a feature that detects requests that identify a specific requested resource relatively and translate them into requests that absolutely identify corresponding specific resources in a specific platform environment. This eases programming of interactions with platform services because it is no longer required to remember and specify the full qualified address of requested platform services. In addition, this makes the developed script independent of individual platform instances, because the resolution of the address of the platform service on a specific platform instance is performed outside of the script. Further, this feature enables to change the addressed platform instance without the need to change any scripting code. As an example, during script development, the address completion feature may direct requests using relative addresses to a developer local platform instance or to a remote, dedicated development and testing platform instance. After development of the script is finished, the configuration of the address completion feature may be changed to direct relative requests to a productive platform environment. The so described feature is also referred to as "pathfinding" feature because it provides the access path to the desired platform environment.

To improve security of script originated communication with platform services, handling of security tokens that are required to access platform services is removed from the vulnerable scripting language domain.

Required access tokens are generated and stored in the script language execution environment before script execution is started. This way, any access of scripting code to those access tokens can be prohibited.

To safely use the stored access tokens for interaction with platform services, above describe "pathfinding" feature is used and improved. When a request is identified that addresses a resource relatively, and a corresponding request that addresses a corresponding platform resource absolutely is created, also the access token is injected into the created request. The platform environment receiving this request first reads and evaluates the access token to determine whether the received request is authorized.

In addition to restricting and securing the access to vendor-internal platform services, it is also desired to restrict script originated access to external resources in a secure way. To achieve this functionality, also the "pathfinding" feature may be extended and improved. In this case, requests addressing requested resource absolutely may be identified, and those absolute addresses may be verified against a set of external addresses, called "allow-list" for which script originated access is allowed. Verification of received absolute addresses against allow-listed addresses may include checking for equality, checking whether the received absolute address and at least one allow-list entry share a sequence of equal prefix or postfix characters, or if the received absolute address contains a character sequence specified by at least one allow-listed entry. On successful verification, the "pathfinding" feature may proceed the request and the corresponding response may eventually be delivered to the requesting script. Otherwise, the request may be suppressed, and a respective error message may be delivered to the requesting script.

A variant embodiment of the disclosed technology is directed to detection and prevention of inadvertent self-reinvocation of custom code.

Different to conventional self-invocation or recursive invocation, typically occurring on a thread or process, causing functionality and performance issues at most, inadvertent self-reinvocation/recursion on a service call level, occurring in a cloud environment, may in addition also cause severe financial issues. Such service level self-reinvocations may, in the worst case request the allocation and execution of infinite cloud instances. If unnoticed and unprevented, such undesired behavior may lead to considerable costs.

For the reliable detection and prevent such undesired behavior of custom code, independently of activities performed by the custom code, the execution management infrastructure, including invocation manager and language execution environment, inject a recursion counter into invocation requests received by and sent by custom code. This recursion counter is protected from manipulations performed by custom code, and also maintained and evaluated outside and independent of custom code.

According to an aspect, a managed execution environment is provided, comprising:
- an internal invocation request for executing code in the managed execution environment, where the internal invocation request includes code for execution and the code for execution is written in a scripting language;
- an execution engine configured to receive and process the internal invocation request, where the code for the execution engine resides in a first memory space of the managed execution environment and is implemented by a programming language that does not permit changes to the first memory space;
- wherein, upon receipt of the internal invocation request, the execution engine creates an execution context for the code for execution and starts execution of the code for execution in the execution context, where creating the execution context includes creating a second memory space for execution of the code, such that the execution context permits changes to code contained in the second memory space;
- wherein, upon completion of the execution of the executable code, the execution engine discards the execution context.

The execution engine may be configured to receive a second internal invocation request and may, in particular, create another execution context in response to receiving the second internal invocation request. The execution context for the second internal invocation request may differ from the execution context for the internal invocation request.

The managed execution environment may further comprise an invocation manager and a plurality of platform instances, where in particular each of the plurality of platform instances may provide functionality or data for different system users and the invocation manager is configured to receive an invocation request and operates to resolve one of the plurality of platform instances to which the invocation requests pertains to.

The invocation request may include identifying information for a given system user and/or the invocation manager may map the identifying information for the given system user to an address for a platform instance associated with the given system user.

The internal invocation request may further include one or more access tokens, and/or the execution engine may configure an access control module using the one or more access tokens.

The access control module may be configured to receive a resource access request for a given resource from the code and/or may direct the resource access request to the given resource.

Upon receiving the resource access request, the access control module may determine whether the resource access request includes a network address for the given resource.

In response to a determination that a network address for the given resource is absent from the resource access request, the access control module may inject the one or more access tokens into the resource access request.

In response to a determination that a network address for the given resource is absent from the resource access request, the access control module may redirect the resource access request to an instance of the given resource. The redirection may include adding an address for a platform instance to the resource access request.

In response to a determination that a network address for the given resource is present in the resource access request, the access control module may verify whether the given resource is on an allow list and denies the resource access request in absence of the given resource on the allow list.

According to another aspect, a method for managing an execution environment is provided, comprising:
- receiving, by an execution engine, an internal invocation request for executing code in a managed execution environment, where the internal invocation request includes code for execution and the code for execution is written in a scripting language, wherein the code for the execution engine resides in a first memory space of the managed execution environment and is implemented by a programming language that does not permit changes to the first memory space;
- upon receipt of the internal invocation request, creating, by the execution engine, an execution context for the code for execution and starting execution of the code for execution in the execution context, where creating the execution context includes creating a second memory space for execution of the code, such that the execution context permits changes to code contained in the second memory space; and
- upon completion of the execution of the executable code, discarding the execution context by the execution engine.

The method may further comprise receiving, by the execution engine, a second internal invocation request and creating another execution context in response to receiving the second internal invocation request, where the execution context for the second internal invocation request differs from the execution context for the internal invocation request.

The method may further comprise providing a plurality of platform instances, where each of the plurality of platform instances provides functionality or data for different system users; and receiving, by an invocation manager, an invocation request and operating to resolve one of the plurality of platform instances to which the invocation requests pertains to.

The invocation request may include identifying information for a given system user and the invocation manager maps the identifying information for the given system user to an address for a platform instance associated with the given system user.

The internal invocation request may further include one or more access tokens, and may in particular further comprise configuring, by the execution engine, an access control module using the one or more access tokens.

The method may further comprise receiving, by an access control module, a resource access request for a given resource from the code and directing the resource access request to the given resource.

The method may further comprise determining, by the access control module, whether the resource access request includes a network address for the given resource upon receiving the resource access request.

The method may further comprise injecting, by the access control module, the one or more access tokens into the resource access request in response to a determination that a network address for the given resource is absent from the resource access request.

The method may further comprise redirecting the resource access request to an instance of the given resource in response to a determination that a network address for the given resource is absent from the resource access request, where, in particular, the redirection may include adding an address for a platform instance to the resource access request.

The method may further comprise verifying, in response to a determination that a network address for the given resource is present in the resource access request, whether the given resource is on an allow list and denying the resource access request in absence of the given resource on the allow list.

The method may further comprise at least one of:
- receiving an invocation request;
- determining whether the invocation request contains a recursion counter;
- incrementing value of the recursion counter by one in response to a determination that the invocation request contains a recursion counter;
- setting the value of the recursion counter to one in response to a determination that the invocation request does not contain the recursion counter;
- comparing the value of the recursion counter with a threshold;
- further processing the invocation request in case where the recursion counter is less than the threshold, wherein further processing the invocation request includes storing the recursion counter by an execution engine, detecting, by the execution engine, an outgoing invocation request and injecting, by the execution engine, the recursion counter into the outgoing invocation request; and
- discarding the invocation request in case where the recursion counter exceeds the threshold.

Further areas of applicability will become apparent from the description provided herein. The description and specific examples in this summary are intended for purposes of illustration only and are not intended to limit the scope of the present disclosure.

### Drawings

The accompanying drawings, which are incorporated in and constitute part of this specification, illustrate embodiments of the disclosure and together with the description, serve to explain the principles of the disclosure. The embodiments illustrated herein are presently preferred, it being understood, however, that the disclosure is not limited to the precise arrangements and instrumentalities shown, wherein:
- FIG. 1: provides a block diagram of a managed environment containing a platform instance and components for the secure ad-hoc execution of received custom code that accesses functionality provided by the platform instance.
- FIG. 2: visually describes the concept of state isolation between consecutive execution requests for different custom code of potential different origin, which are performed using the same execution environment.
- FIG. 3: illustrates the advantages of a dedicate runtime environment for custom code to gain independence of cloud vendor specific APIs.
- FIG. 4: compares conventional ad-hoc code execution frameworks with the proposed solution, in terms of reuse of components and components that are affected by potentially malicious state changes.
- FIG. 5: describes the interaction of execution environment code modules, implemented in a native language that does not permit run time change of executing code, with target language modules, implemented in scripting languages that permit such run time code changes.
- FIG. 6: describes the processing of an incoming invocation request, including transforming the invocation request into an internal invocation request containing security configuration data, creating, and configuring native execution environments for the requested execution using this security configuration data, and performing the requested code execution in a temporal execution context that interacts with the native execution environment.
- FIG. 7: describes the processing of requests to retrieve or access remote resources issued by the execution of received custom code, by the native execution environment.
- FIG. 8: provides a block diagram of a variant of the disclosed technologies that is used to detect and suppress undesired recursive invocation requests.
- FIG. 9: contains flow charts of processes executed by language execution environment and invocation manager to detect recursive invocation requests, observer recursion depth and discard further recursive invocation requests if a recursion depth threshold is exceeded.
- FIG. 10: conceptually explains the separation of custom code in a target language context from code performing recursion protection in an execution environment layer.
- FIG. 11: shows an exemplary means to attach a recursion counter to an invocation request.

### Detailed Description

Example embodiments will now be described more fully with reference to the accompanying drawings.

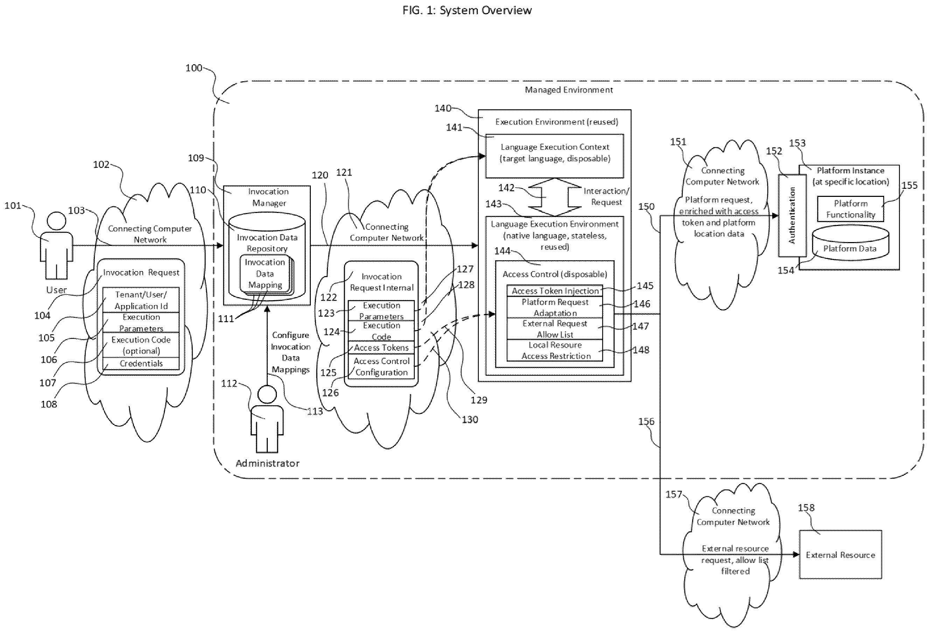

The disclosed technologies are directed to the provision of execution environments for custom code provided by customers of service providers like application performance monitoring and management services. Execution environment and services are provided and managed by the same vendor. Typically, customers of the performance monitoring and management service provider send their custom code that accesses their data and performs specific analysis tasks on their data to the execution environment. An overview of a system that provides an execution environment for arbitrary custom code, that controls access of executing custom code to customer specific data stored in a platform instance and to external resources, and that isolates the state of individual executions from each other is shown in FIG. 1.

A managed environment 100, maintained by a provider of application performance monitoring and management services, may contain at least one platform instance 153 configuration, directed to receiving, processing, and storing application performance related data for one or more customers, where the application performance related data may contain data describing customer's computing environment, including data describing individual components of the computing environment and their dependencies, resource consumptions of those components, activities performed by those components, and log data created by those components. In addition, the managed environment may contain components that implement a secured execution context for customer specific code that accesses data stored in the platform instance.

Those components include an invocation manager 109, which receives external invocation requests for custom code that intends to operate on data 154 stored in the platform instance, or to use functionality 155 provided by the platform instance in form of invocation requests 104, and transforms them into internal invocation requests 122, which are forwarded to an execution environment 140 on which the actual execution of the code is performed. The receiving execution environment 140 provides a generic execution environment for processes, like an operation system or a container environment, and contains a language execution environment 143 configured to receive internal invocation requests 122. The language execution environment 143 may also be referred to as execution engine for code that was received with internal invocation requests. On receipt of internal invocation requests, the execution environment may configure access control 144 for the to be executed code within the language execution environment, create a language execution context 141 for the execution of the to be executed code, and trigger the start of the to be executed code in the language execution context.

The managed environment 100 may be implemented using an elastic cloud computing environment and all components contained in the managed environment, like the invocation manager, the execution environment and the platform instance may be implemented using virtualized cloud computing components like virtualized computing systems or container environments that are created, used, reused, and discarded by the underlying elastic cloud computing system according to observed load situations.

Execution environments 140 may in this setup be configured in a way that the language execution environment 143 is implemented in native, compiled code that provides no or only very limited possibilities to change the code of the language execution environment during runtime. As an example, the language execution environment may be written in a programming language like C++ or Rust. During creation of a new execution environment by the underlying elastic cloud computing environment, only the language execution environment 143 is created, and access control data 144 of the created language execution environment is initiated to a state that prohibits all access.

On receipt of an internal invocation request 122, an execution environment instance is selected to process the received request, the access control 144 of the language execution environment 143 running in the selected execution environment is configured according to the access control configuration 126 of the received internal invocation request and also access tokens 125 received with the internal invocation request are stored in the access token injection unit 145 of the access control configuration of the language execution environment 143. After the language execution environment 143 of the selected execution environment 140 was prepared to perform the requested execution, a language execution context 141 is created and the execution of the code 124 received with the internal invocation request 122 is started in the language execution context. If execution parameters 123 are received with the internal execution request, those execution parameters are applied to the started execution.

Language execution context 141 and language execution environment 143 may reside in different memory areas/memory spaces. Those memory areas/memory spaces may be provided by the execution environment 140.

During the performed execution, interactions 142 between language execution context 141 and language execution environment are initiated by the executed custom code. If those interactions are directed to entities external to the language execution environment 143, access control 144 verifies if those interactions are permitted. Access control may contain local resource access restrictions, which specify and restrict the access to local resources of the execution environment, like access to local disk storage of the execution environment.

Also requests to access resources external to the execution environment 140 are restricted and controlled by the access control module 144. Access to services and data that are provided by a selected platform instance 153 is distinguished from access of other resources 158 that not provided by the addressed platform instance. Those other resources 158 may be located external to the managed environment, as shown in FIG. 1, but they may also reside inside the managed environment 100.

Requests to platform instance 153 resources are identified and adapted by the platform request adaptation section 146 of the access control module 144 to address resources provided by a specific platform instance 153 that resides in the managed environment 100. Typically, platform resources are addressed by custom script code in a way that omits identification data for a specific platform instance. As those addresses identify a requested resource relatively, by specifying that those resources are provided by any platform, without specifying an actual platform instance 153 that provides the requested resource, those addresses are called "relative addresses". Access control may, on receipt of requests from the language execution context, analyze contained address data to determine whether the address is specified relatively, and in this case perform platform request adaptation to transform the relative address into a corresponding absolute address that identifies a platform instance that is specified in the platform request adaptation configuration.

Platform 153 and execution environment 140 providers may operate different installations of execution environment and platform infrastructure in different managed environments, and addresses of platform instances may vary between different managed environments. To ensure that customer code received for execution operates correctly in all those managed environments, it is required that this code addresses platform data and services in a location independent way. The platform request adaptation section 146 of the access control module may adapt received location independent requests in a way to address a concrete platform service or data element in a specific platform instance. In HTTP based communication, relative URLs may be used to implement this functionality. In an example, custom code may issue a request to gather specific performance monitoring data by only specifying the name of the service, without specifying its location, with an URL like "/getPerformanceData". The platform request adaptation section may adapt such a request by prepending location data for a specific platform instance providing this service and generate an absolute URL like "managedEnvironment1/platformlnstance1/getPerformanceData". Removing absolute platform address data from custom code and resolving platform address data outside of custom code during execution of requests directed to platform resources makes custom code independent of specific platform locations and management environment configurations.

In addition to adapting requests directed to platform resources by adding concrete address data, the access token injection section 145 of the access control module adapts received platform request by adding an access token to those requests.

The so adapted and enriched platform requests are forwarded 150 to the authentication module 152 of the addressed platform instance 153, which evaluates the received access token to determine whether the received request is authorized. In case of a successful authorization, access to the requested platform functionality 155 or data 154 is granted.

Access tokens are created by the invocation manager out of credential 108 and/or user id data 104 contained in received invocation requests 104 and stored 125 in corresponding internal invocation requests.

Requests to resources that are located outside the managed environment are typically addressed in an absolute way, and no location adaptation is required. Those requests are verified by an external request allow-list 147 section, which contains a description of resources for which access by the currently executed custom code is allowed. If the external request allow-list section 147 permits a received request, it is forwarded 156 to the requested external resource.

After the execution of the received code 124 is finished, the language execution context 141 that was used for the execution is discarded, the access control 144 of the language execution environment is reset to a state that disables all access, and the execution environment 140 is released to be available to process the next internal invocation request.

Invocation requests 104 are typically issued by users 101 that are related to customers of the service provider that operates platform instance 153 and the custom code execution infrastructure consisting of invocation manager 109 and execution environment 140 instances. Such invocation requests may contain but are not limited to tenant/user/application identification data 105, which identify the user sending the invocation request, the customer/tenant of the service provider to which the platform data or platform functionality relates that the executed code intends to use or access, and which may also contain an application identifier if the invocation request itself does not contain code for execution. In this case, application identifier data may be used as identifier for code that is already known to the custom code execution infrastructure. Further, an invocation request 104 may contain execution parameters 106, actual execution code 107 (if no application identifier is provided which identifies code that is already known by the receiving environment), and credential data 108 which contains data to identify the user that sent the request and to determine the activities to which this user, and the submitted code are authorized.

Invocation requests 104 are received by an invocation manager 109 that manages an invocation data repository 110 which contains a plurality of invocation data mapping records 111. On receipt of an invocation request 104, the invocation manager may use tenant/user/application identifier data of the received request to select a matching invocation data mapping record 111 and use the stored mapping data to create a corresponding internal invocation request 122. The mapping may contain access configuration data specific for the received tenant/user/application identifier data 105, which may be used to set access control configuration data 126 of the created internal invocation request. This access control configuration data may contain platform request adaptation data which may, during code execution, be used to transform location independent requests for platform data or functionality into location specific requests that address data or functionality of a specific platform instance. In addition, this access control configuration data may contain allow-list data that identifies external resources that are accessible for code that is executed on request of the specified user, in context of the specified tenant and for the specified application.

This way, each tenant/user/application identifier combination may be assigned its own access control configuration which is then used for code executions related to this tenant/user/application identifier combination.

Further, the application identifier may be used to query a code repository (not shown), which maps application identifiers to execution code, to select and fetch the code that is to be executed if the received invocation request 104 did not contain execution code 107.

Credential data 108 contained in a received invocation request 104 may be used by the invocation manager 109 to create access token data 125 for a create internal invocation request 122.

An internal invocation request 122 created by an invocation manager in response to the receipt of an invocation request 104 may contain but is not limited to execution parameters 123, which may be set to the execution parameters 105 received with the received invocation request, execution code 124, either set to execution code 124 already received with the invocation request, or to execution code resolved using an application identifier received with the execution request, access tokens 125 created for received credential data 108, and access control configuration data 126 fetched from an invocation data mapping record 111 that matches the received tenant/user/application identifier configuration 105.

The created internal invocation request is forwarded to an execution management system (not shown), which may maintain a set of execution environments 140, of which a portion is currently occupied by the processing of other concurrently ongoing invocation requests and another portion may be free to receive and process internal invocation requests. In case no execution environment 140 is available to process a received internal invocation request, a new one may be created, which contains a language execution environment (but no language execution context) with access control 144 configured to disable any access. The internal invocation request is received by the selected execution environment, which first reads access token 125 and access configuration data 126 to configure 129, 130 the access control module 144 of the language execution config, then creates a language execution context 141 for the execution of the received code 124 and finally starts the execution of 128 the received code 124 using 127 the received execution parameters 123 in the created language execution context 141.

Invocation data mappings 111 may be configured and maintained by an administrator of the custom code execution system.

It is noteworthy that execution code data 106/124 contained in invocation request 104 or internal invocation request 122 records may either contain the actual code that should be executed, or it may contain a reference/address/URL to a file containing the code that should be executed.

The system deployment shown in FIG. 1 shows an invocation manager 109 on the system boundary which receives invocation requests 104, and creates corresponding internal invocation requests 122, which are then distributed to execution environments 140 for execution. In this setup, one invocation manager triggers executions on different execution environments, and invocation managers and execution environments 140 are strictly separated from each other, because they run on different nodes/entities of the managed environment. This separation is desired, because the invocation manager may need to access secret data, e.g., to create access tokens. This secret data should be protected from unwanted/undesired access from potential malicious code that is executed in a language execution context 141. However, also other deployment variants are possible in configurations with lower security requirements, which deploy invocation manager and execution context as two separate processes that run in the same container, or into two separated, but communicationally coupled containers that operate in the same pod (set of containers managed by a Kubernetes environment). However, invocation manager and execution environment should always be executed in separate processes for security reasons.

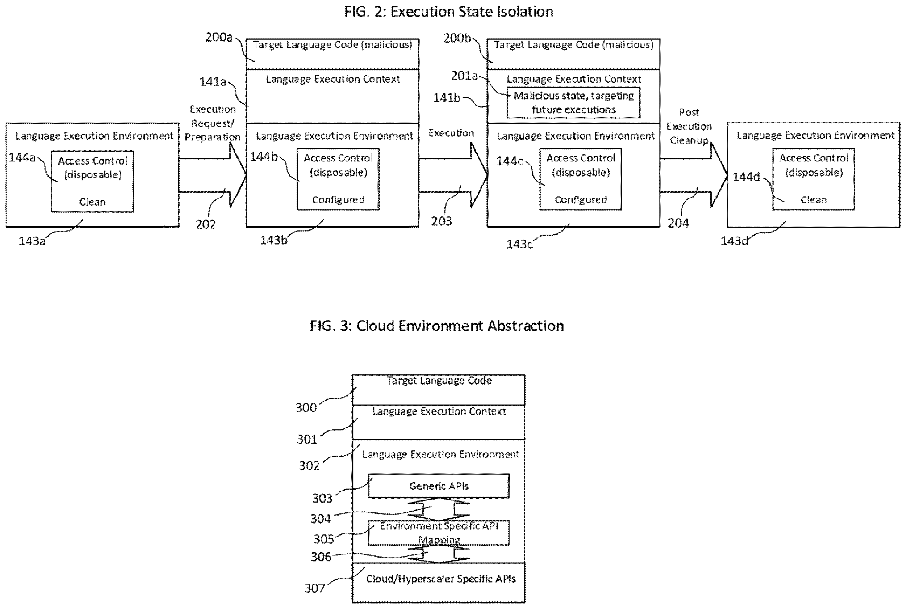

Referring now to FIG. 2, which illustrates state transitions of an execution environment 140 during the processing of an internal invocation request. The described state changes caused by the processing guarantee that state changes caused by a specific code execution performed by an execution environment are isolation from states of consecutive executions performed by the same execution environment. Highly dynamic and adaptive programming languages like JavaScript, allow executing code to permanently, at least in the scope of an execution context, change the in-memory representation of code. As an example, execution of a specific portion of custom code may change the memory representation of code of an underlying library, that is typically used by a plurality of different scripts. If consecutive executions are not properly isolated, then subsequent script code executions may be affected by code changes performed by previous executions. As such code changes may lead to unexpected results of those subsequent executions, including also undesired malicious activities injected by bad actors, it is desired to protect those subsequent executions from such undesired code changes.

The initial state of an execution environment is represented by a language execution environment 143a containing a clean (i.e., disabling any access) access control module 144a. Processing the receipt of an internal invocation request 122 causes the language execution environment to perform execution preparation activities 202, which change the status of the execution environment into a language execution environment 143b containing an access control module 144b configured according to the access control configuration data 126 received with the internal invocation request 122. Further, execution preparation activities include the creation of a new language execution context 141a, into which the to be executed target language code 200a, which was received with the internal invocation request, is loaded. In this case, the received code contains some malicious commands directed to change some library code (i.e., logging functionality) to perform undesired activities (i.e., post log messages to external, fraudulent receivers). Execution 203 of the received target language code changes the state of the execution environment again, into a language execution environment 143c interacting with the language execution context 141b executing the received target language code 200b, where the state of the language execution context 141b is changed to now contain a malicious state 201a that targets future code executions performed by this language execution context.

After execution of the target language code is finished, post execution cleanup activities 204 are performed, which dispose the language execution environment (and also the contained malicious state) and reset the access control configuration 144d of the language execution environment. This transforms the language execution environment 143d into a state in which it is unaffected by potential malicious code and where it is ready to receive and process the next internal invocation request 122.

Coming now to FIG. 3, which illustrates another advantage that a language execution environment that separates execution of customer code from underlying native and vendor specific cloud infrastructure environments has for service providers that also operate execution environments for customer code.

Typically, service providers may provide their services in a way that is independent of specific underlying cloud service providers, to be able to quickly move their services between different cloud service providers, or to efficiently and quicky expand their services to additional cloud service providers.

FIG. 3 illustrates the additional abstraction layers that a dedicated language execution environment that is controlled by a service provider provides. Cloud/Hyperscaler specific APIs 307 constitute the base abstraction layer which provides interfaces to interact with the cloud environment and with other, remote components.

The language execution environment layer 302 contains an environment specific API mapping module 305, which interacts 306 with the native cloud infrastructure APIs 307 to provide 304 generic APIs 303 that are independent from the native cloud APIs. The language execution context 301 exclusively uses the generic APIs 303 to fulfill requests received from executing target language code 300. To move the language execution environment layer, and all layers executing on top of it (language execution context 301 and target language code) form one cloud environment to another, it is sufficient to update the environment specific API mapping section 305 to match the native APIs of the new cloud environment.

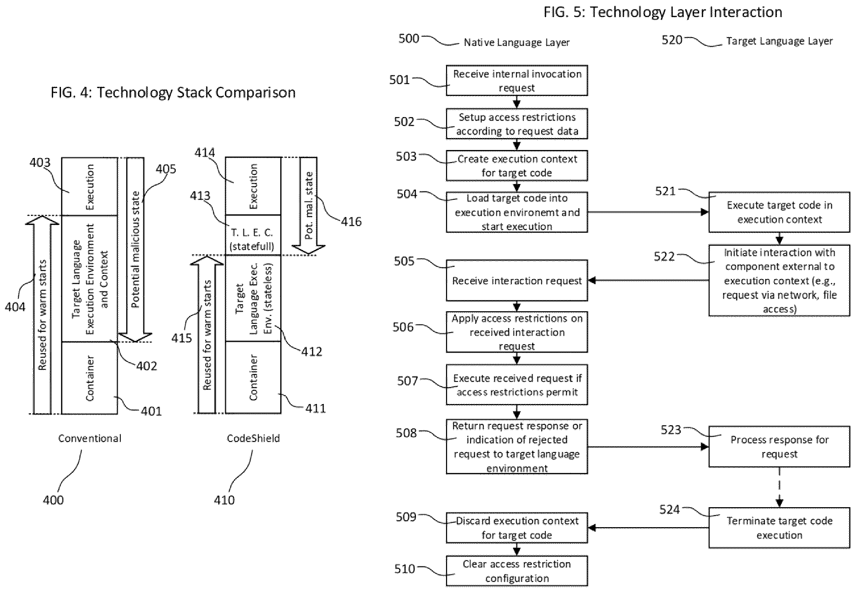

Referring now to FIG. 4, which compares for conventional technology stacks and for the disclosed approach, the portions of reused execution environment components and the possibility to permanently inject potentially malicious state or code into these components.

Conventional approaches 400, as well as the proposed novel approach 410, are based on a container environment 401/411 that generates an isolated execution environment for processes. As an example, Docker or Kubernetes environments may be used to provide such container environments. The main purpose of those container environments is to simulate a separate and isolated process execution environment, like an operating system environment. In conventional approaches, a process 402 providing target language execution environment and target language execution context in a monolithic way is executed in this container environment. Target language execution environment provides interfaces that enables target code to interact with the underlying container environment and target language execution context provides the environment and context in which the target language itself is executed, like status information about currently executed code, management of data objects created during the execution of target language, or changes of in-memory representations of executed code. A typical prior art implementation of a target language execution environment and context layer is Node.js. Node.js is an environment for the server-side execution of JavaScript code. Typically, a Node.js instance is started in a container environment and then used to process multiple, consecutive JavaScript code execution requests. As Node.js itself is partially implemented in JavaScript, potentially malicious state/code changes may leak between different JavaScript executions.

On receipt of execution requests for custom code, this execution 403 is performed using the combined execution environment and execution context component.

To improve the performance of the execution environment, container environments 401 and combined target language execution environment and execution context modules 402 are reused 404 for multiple consecutive execution request. Execution of custom code may permanently change the state of the reused target language execution environment and execution context (at least the state of the execution context portion of this monolithic component), and potentially inject malicious state or code 405 in the target language execution environment and context 402. As the whole target language execution environment and context 402 is reused for subsequent execution requests, those subsequent execution requests are affected by this malicious state or code.

The new proposed approach provides a stateless target execution language environment 412 which is separated from a stateful target language execution context 413. Container environment 411 and target language execution environment 412 are reused 415 for multiple execution requests, and a new target language execution context 413 is created for each requested execution 414. With this architecture, potential malicious state, or code 416, that is injected by requested executions only affects the not reused target language execution context 413. Therefore, potential malicious state or code 416 does not affect components, like the target language execution environment 412, which are reused for consecutive execution requests. As a consequence, the states of consecutive execution requests are safely isolated and state changes introduced by a requested execution cannot influence subsequent executions performed on the same, reused environment.

Basically, the execution context for scripting languages like JavaScript maintains a memory image for the execution of the script code. Execution of the script code may include reading and interpreting the script code by an interpreter or compiling the script into an intermediate language or into native code, and then executing the intermediate code or native code representation of the script code. This memory image is intentionally not protected against modifications to increase the flexibility of those languages. However, this increased flexibility also increases risks, as it also makes undesired, malicious code changes possible. For native languages, like C/C++ or Rust, the memory image containing executable code is protected against modifications, which makes those languages less flexible, but on the other hand, this reduced flexibility also considerably increases security. An optimal form of interaction between enclosing native and stateless code and execution context for stateful script code that is executed under management of the native code is desired. This interaction should minimize the portions of code that are potentially affected by state changes caused by the execution of received script code, as these portions cannot be safely reused for multiple, subsequent script executions.

Referring now to FIG. 5, which illustrates the interaction of a native layer 500 and a target language layer 520 to assure state isolation between consecutive script executions. Requests to external resources are delegated from the target language layer to the native language layer. Access restrictions concerning those requests are managed and enforced by the native language layer, because it is less vulnerable to injection of malicious code.

The native language layer 500 is situated in the target language execution environment 143, and the target language layer 520 is realized by target language code that is received for execution 124, and by components of the target language execution context 141 that are implemented in target language.

Processing of execution requests of target language code starts by the receipt 501 of an internal invocation request 122 by native language code. Afterwards, native code extracts access restriction data, like access token 125, and access control configuration data 126 which may contain allow-list data for external resources 158 and location data for platform 153 resources and uses the extracted access control configuration data to setup 502 the access control module 144 of the language execution environment 143. Afterwards, native code creates 503 a target language execution context 141 for the execution of the received target language code, loads 504 the target code into the created execution context and triggers the start of the execution 521 of the received target language code in the target language layer. During execution of the target code, an interaction 522 with a component that is external to the execution context is required. This includes but is not limited to access to persistent storage service provided by the container executing the surrounding execution environment 140, or communication with external resources via a connecting computer network. Those interaction requests are forwarded to the native language layer 500, and on receipt 505 of such requests, the native code applies 506 access restrictions as configured in the access control module 144 of the language execution environment 143 to the received request. This may include adapting the request according to the actual network address of an addressed platform instance, and injecting access token data to the request if the request is directed to a platform resource or service. If the request is directed to an external resource 158, the request may be verified using configured allow-list entries to determine if the request permitted. If the request is permitted according to currently configured access restrictions, native code executes 507 the received request and then forwards 508 response data for the request to the target language layer, which then processes 523 the received response. Execution of target language code is continued until a termination 524 of this execution is requested. After execution termination, the native layer discards 509 the execution context 141 that was created for the received target code and clears 510 the access control configuration module 144, to disable any access. This may include removing all allow-list data, platform location data and access token data from the access control module 144.

More specific, activities performed in the native language layer may be performed by a process that executes native code that is written in C/C++ or Rust programming language. This code uses a library or component that contains functionality to execute or interpret code in a scripting language. An example for such a component is the V8^{®} JavaScript engine provided by Google. This JavaScript engine may be embedded in enclosing processes that execute code that uses the JavaScript engine to create JavaScript execution contexts for the processing of JavaScript code. Creating the JavaScript execution context maps to step 503 and executing the JavaScript code in the execution context maps to step 521.

Requests that are created by processing JavaScript code that require interaction with entities that are external to the execution context of the JavaScript code are received by the JavaScript engine and forwarded to the processing environment into which the request is fulfilled. Creating the request by JavaScript code and forwarding the request to the surrounding processing environment maps to step 522, and processing/fulfilling the request by the surrounding (native) processing environment maps to steps 505 to 508.

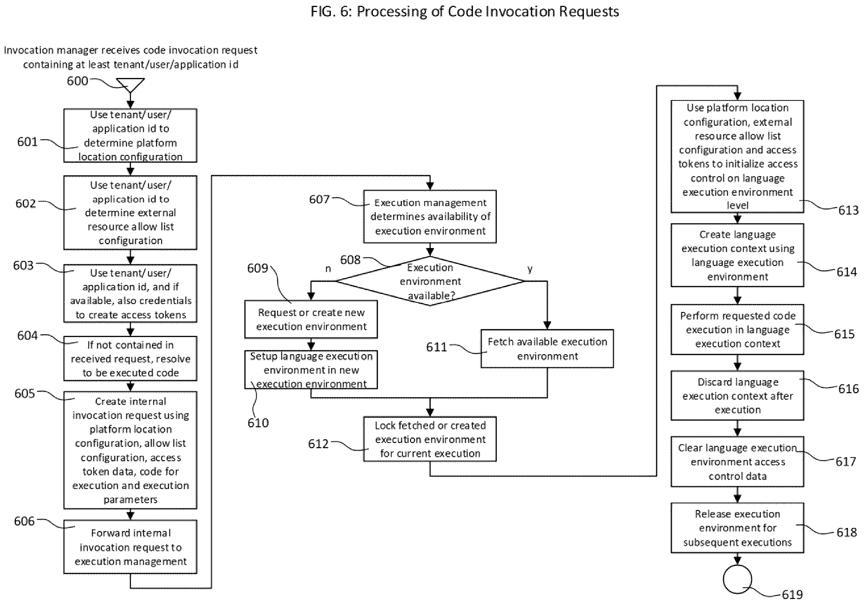

Referring now to FIG. 6, which describes the processing of code invocation requests by invocation manager 109 and an execution environment 140.

The process starts with step 600, when a new invocation request 104, containing at least tenant, application, and user identification data 104, is received. In following step 601, the invocation manager uses received application, user, and tenant identification data to determine corresponding platform location data. Application, user, and tenant identification may be used to identify and select an invocation data mapping record 111, which specifies the platform instance 153 that is addressed by the invocation request, and also (network) address or location data for this platform instance.

Following step 602 may then determine allow-list data for the received invocation request, also by selecting the invocation data mapping record identified by received application, user, and tenant identification data and fetch allow-list data stored in the selected invocation data mapping record.

Subsequent step 603 may then use received application, user, and tenant identification data, and if available, also received credential data to create access token data for the requested code execution. Access tokens may be used by the authentication module 152 of a platform instance 153 to verify if received requests are authorized. Basically, such access tokens have a limited time of validity and are generated from identification data, like user, tenant or application identification data and credential data, like passwords. In some cases, where only limited access (e.g., read only access) to non-sensitive data is required, only identification data may be required to create corresponding access token data.

Following step 604 may, if the invocation request does not already contain code for execution 107, use received tenant/user/application identification data 104 to resolve the to be executed code. Step 604 may access a code repository (not shown) which maps tenant/user/application identification data to corresponding code for execution to resolve and fetch the to be executed code.

Afterwards, step 605 is executed which creates an internal invocation request 122 using access token data 125 created by step 603, access control configuration data in form of platform location data and access allow-list data created by steps 601 and 602, execution code 124 either received with the invocation request 104, or resolved by step 604, and received execution parameters 106. Following step 606 then forwards the created internal invocation request to an execution management system (not shown). The execution management system may manage a set of currently idle execution environments 140 which may be used to process incoming internal invocation request. In case no idle execution management system is available to process an incoming internal invocation request, the execution management system may create a new execution environment for the processing of the received internal invocation request 122. The execution management system may also discard idle execution environments if the rate of received internal invocation requests decreases.

In step 607, the execution management system may determine whether an execution environment is available to process the received internal invocation request, and following decision step 608 may, in case an idle execution environment is available, continue with step 611 which fetches this execution environment to process the received internal invocation request.

Otherwise, decisions step 608 continues with step 609 which creates a new execution environment 140, and step 610, which sets up a language execution environment 143 in the new execution environment.

Step 612 is executed after step 610 or step 611, which reserves the created or fetched execution environment for the processing of the received internal invocation request.

In following step 613, the language execution environment 143 of the selected execution environment uses platform location configuration, external resource allow-list configuration and access token data contained in the received internal invocation request to setup and configure its access control module 144, and in subsequent step 614, a target language execution context 141 for the execution of the execution code 124 received with the internal invocation request 122 is created. As an example, the language execution environment may be implemented in a native language like C/C++ or Rust and be configured to receive and process internal invocation requests 122. The native C/C++ or Rust code would, on receipt of an invocation request, first extract access control configuration data 126 and access token data 125 from the received request and use this data to setup and configure the access control module 144, which is also implemented in and controlled by native code. Afterwards, the native code would use a library or component directed to the execution of scripting code like JavaScript to create an execution context 141 for the received cod 124 and then start the execution of the received code in this execution context. The scripting code execution library or component is configured to forward all requests from the executing script code that interact with external resources (i.e., HTTP requests or other computer network interactions) to the language execution environment, which verifies or adapts those requests according to the configuration of the access control module. An example for a JavaScript execution component or library that may be used to create language execution contexts is the Google V8^{®} JavaScript engine.

Afterwards, step 615 executes the received code 124 using received execution parameters in the created target language execution context.

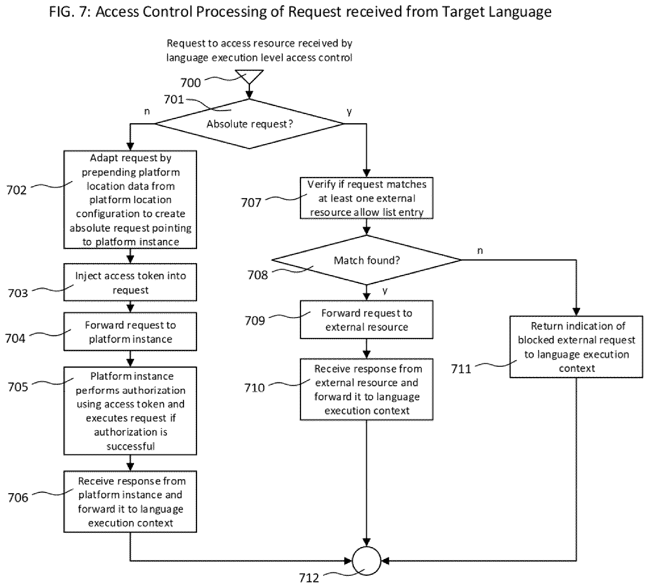

Execution activities which are confined to the created language execution context, like changing values of parameters or values, creating, changing, or deleting objects by the scripting language, are performed within the language execution context 141 and require no interaction with the language execution environment 143. If execution activities require interactions 142 with entities/resources that are external to the language execution engine, those interactions are intercepted by the language execution context 143, verified, and manipulated by the language execution environment 143, according to access control 144 configurations, before those interactions are forwarded to the intended receiver. A detailed description of the activities that are performed by the language execution environment on receipt of such interactions is described in FIG. 7.

After execution of the received code is finished, step 616 is executed which discards the target language execution context, followed by step 617 which clears the configuration data of the access control module 617 to bring the execution environment into a state to receive and process the next internal invocation request. In managed language environments, like Rust execution runtimes, step 616 may be performed by simply clearing all references to the target language execution context, which leads the Rust environment to discard the target language execution context in a controlled way. In not managed language environments, like C/C++, it may be required to call an appropriate destructor function to correctly discard the target language execution context.

Afterwards, step 618 releases the execution environment for the processing of subsequent invocation requests.

In some embodiments, one execution environment may be capable to process multiple internal invocation requests simultaneously. In such environments, execution environments need to be capable to administrate multiple access control modules, each of those modules being configured according to access control config data received with a specific internal invocation request. In addition, separate target language execution environments need to be created for each concurrently processes internal execution request, to separate concurrent code executions. Execution environments also need to link corresponding access control modules and target language execution environments that were created for the same internal invocation request in a way that the correct access restrictions are applied to requests issued by the execution of received script code. Also, management of execution environments by the execution management system needs to be adapted in such embodiments by sending incoming internal invocation requests to one execution environment until its capacity, e.g., in terms of maximal number of requests that can be processed in parallel, is reached. A new execution environment may only be created when the processing capacity of all currently available execution environments is reached.

Coming now to FIG. 7, which describes the processing of requests for external resources issued by executing target language code, by the language execution environment. Target language may use a specific command to request external resources, like the command "fetch" for JavaScript code. This command may accept a parameter that identifies and addresses the requested resource. This address parameter may either identify the requested resource absolutely, by specifying an absolute location. In case of a resource addressed according to the HTTP protocol, this may be an absolute URL, starting with a protocol specification, followed by a network address an optional resource path, a resource name and optional request parameters. A relative address according to the HTTP protocol may start with a resource path, followed by a resource name and optional request parameter. A concrete example of an absolute URL is "http://externalserver.com/resourcepath/myresource.txt?myparam=1", where "http://" specifies the used protocol, "externalserver.com" the network address of the server providing the requested resource, "resourcepath" the path to the requested resource on the providing server, "myresource.txt" the name of the requested resource, and "myparam=1" is a parameter that is evaluated by the receiving server to create the desired response. In this example, the "myparam=1" may indicate to not return the complete content of "myresource.txt" in a response, but only the first line of this file.

A concrete example for a relative URL is "/platform/services/myservice?serviceparam=1", where only a path "platform/services" to a service "myservice", and service parameters "serviceparam=1" are specified, without specifying a network address identifying the server that provides the requested service. Conventionally, the address of the server from which the code or document containing the relative URL was received is used to translate a relative URL into an absolute one. In this concrete example, if the code or document containing the relative URL was loaded from a HTTP server "myserver.com", the relative URL would be converted into the absolute URL "http://myserver.com/platform/services/myservice?serviceparam=1".

The process starts with step 700, when the access control module 144 of the language execution environment 143 receives a request issued from executing target language code that addresses a resource that is external to the target language execution context. Following decision step 701 then determines whether the received request addresses the requested resource absolutely or relatively. Step 701 may e.g., verify whether the resource address starts with a network address to determine that it is an absolute address, or whether it starts with a resource path to determine that it is a relative address.

If the request addresses the requested resource absolutely, the process continues with step 707, which verifies if the received address matches at least one entry of the external resource allow-list of the access control module. The allow-list entries may specify match data in form of domains, like "mydomain.com", portions of domains like "mydomain", combinations of domains and resource paths, like "mydomain.com/myresource/" and the like, and match types, like "equals", "contains", "starts", and suchlike. Step 707 may, for each allow-list entry, apply the match type of the entry to the received absolute address and the match data of the respective list entry to determine whether the received absolute address is allowed according to the allow-list entry. Step 707 may indicate that a received absolute address is allowed if at least matching with one allow-list entry indicates that it is allowed.

If no match was found by step 707, following decision step 708 continues the process with step 711, which indicates to the target language layer that the request was blocked due to access restrictions. The process then ends with step 712.

Otherwise, if a match was found, decision step 708 continues with step 709, which forwards the request to the external resource, followed by step 710 which waits for the corresponding response and, on receipt of the response, forwards it to the target language layer. The process then ends with step 712.

In case decision step 701 identifies a request that addresses a resource relatively, the process continues with step 702, which adapts the relative address by prepending platform instance location data to create a corresponding absolute address that identifies a resource provided by the platform instance 153 identified by the platform request adaptation data 146 of the access control module.

As an example, the relative address received with the request may specify a platform service by its resource path and name, like "/appservices/myservice", where "/appservices/" specifies the path to the service within the context of a platform instance, and "myservice" identifies the addressed service. Address data for the to be addressed platform instance 153 stored in the platform request adaptation section 146 of the access control module 144 may be "myenvironment.myplatforminstance", which uniquely identifies the to be addressed platform instance.

To provide a more formal definition of absolute and relative addresses, an absolute address contains data that identifies a specific network node, and data that identifies a specific resource that is provided by this network node. Examples for data identifying a specific network node include network domain names or IP addresses. A relative address only specifies the location of a resource within the scope of a network node, without identifying a specific network node. To access a resource that is addressed relatively, first the network address for the network node providing this resource needs to be resolved.

Step 702 may create an adapted absolute address for the received relative address by prepending the platform address data to the received relative address data. In the concrete example this would lead to absolute address "myenvironment.platforminstance/appservices/myservice", which identifies and addresses the requested service at the to be used platform instance 153. It is noteworthy that that the creation of absolute addresses out of received relative addresses differs from the approach known in the art that was described above. Instead of using origin data for the document that contained the relative address to create a corresponding absolute address, configuration data that is independent from the origin of the code that created the relative address is used to create the corresponding absolute address.

Following step 703 may then inject access token data into the received request. Typically, a request to access remote resources contains address data identifying the addressed resources and additional parameter data that specify conditions for the access of the remote resource. Those conditions also include authorization data that is used by a receiver of the request to determine whether the entity that sent a request is authorized to access the requested resource.

As an example, for requests based on HTTP, step 703 may create a HTTP GET request as follows:
"GET https://myenvironment.platforminstance/appservices/myservice HTTP 1.1 Authorization-Bearer: uewkedghsdilghl239ufsrtz". In this example, "GET" indicates a request for a resource, "https://myenvironment.platforminstance/appservices/myservice" specifies the address of the addressed resource, "HTTP 1.1" delimits address data from other request data, and specifies the version of the communication protocol, and "Authorization-Bearer: uewkedghsdilghl239ufsrtz" is the access token in form of a request parameter that was injected by step 703.

Following step 704 sends the absolute request created by steps 702 and 703 to the platform instance 153 via a connecting computer network.

In step 705, which is performed on the receiving platform instance, the authentication and authorization module 152 of the platform instance may receive the incoming request, read, and verify the access token data injected by step 703 to determine whether the entity that sent the received request is authorized to access the requested resource. If authorization was successful, the authentication and authorization module may forward the request to the addressed platform service/functionality 155 or data elements 154.

Following step 706 receives the response from the platform instance and forwards it to the target language layer. The response may either contain data fulfilling the original request if authorization was successful, or data indicating a failed authorization otherwise. The process then ends with step 712.

Next to the "fetch" command to access and retrieve remote resources, JavaScript also provides "import" or "require" commands, which are used to add library code to JavaScript code. Those commands may also be intercepted by the language execution layer and processed as described in FIG. 7 to secure the execution of those commands. For the issuing JavaScript execution, the only difference may be that it is typically possible to recover or at least gracefully fail from a failed "fetch" command, which is typically used to retrieve data for processing, whereas a failed "import" or "require" command typically leads to an immediate termination of the issuing JavaScript execution because code that is required for the execution of the script is not available in this case.

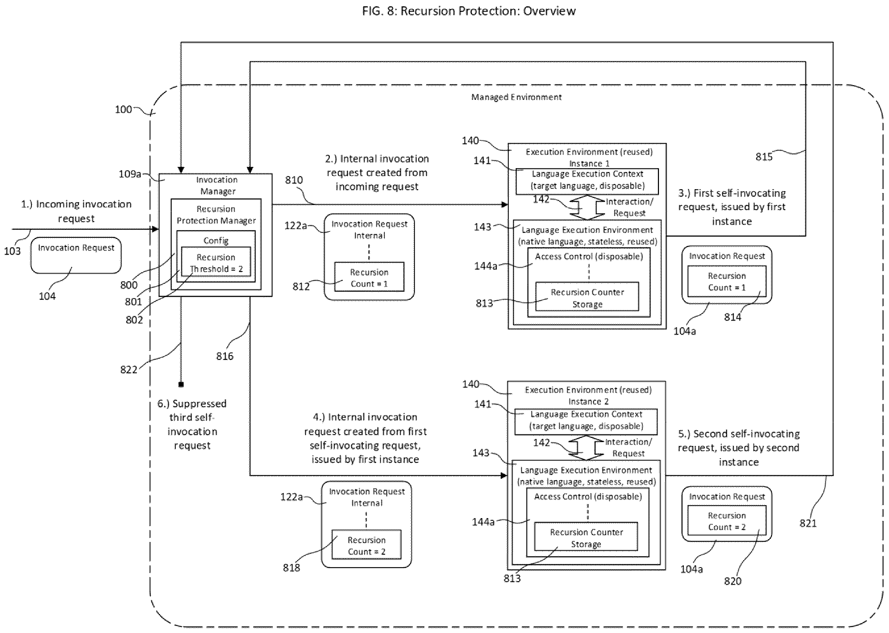

Referring now to FIG. 8, which contains a block diagram of a managed execution environment which in additions performs recursion detection and prevention of further recursive executions if a specific recursion threshold is exceeded.

An invocation request 104 may be received 103 by an invocation manager variant 109a, which operates as the invocation manger 109 described in FIG. 1, but also maintains a recursion protection manager module 800, containing a configuration area 801 which specifies a recursion threshold 802. In the depicted example, the recursion threshold has the value 2, but this value may be changed according to the requirements of deployed applications.

On receipt of the invocation request, the invocation manager 109a may create a corresponding internal invocation request 122a. The internal invocation request 122a may have the same structure and functionality as the already described invocation request 122, but may in addition contain, next to other, already described parameters, a recursion count parameter 812, which is inserted into the request by the recursion protection management module of the invocation manager. The initial value of this parameter, which is used for internal invocation requests that were generated from invocation requests 104 received from external sources containing no recursion counter parameter, is set to 1. The generated internal invocation request is forwarded to the managed environment and used to start up an execution environment 140, in which a language execution environment 143 is running and receiving the internal invocation request to perform access control tasks, and to spin off a language execution context 141 for the execution of custom code which was received or identified by the received internal invocation request. The access control variant 144a of used by in this case, maintains a recursion counter storage 813, in addition to other, already described access control tasks. The purpose of the recursion counter storage module is to read and store the value of the recursion counter 812 received with incoming invocation requests 122a, and to inject a recursion counter parameter having the stored recursion counter value into outgoing requests that were issued by custom code executed in the language execution context 141.

In the depicted example, instance 1 of the execution environment issues 815 a first invocation request 104a. The recursion counter storage 813 injects a recursion counter parameter with value 1 814 into this request.

The invocation request 104a is received by invocation manager 109a and converted into a corresponding internal invocation request 122a. The recursion protection manager reads the recursion counter 814 from the incoming invocation request, increments it by 1 and compares the result of the increment operation to the recursion threshold 802. As the incremented recursion counter has now the value 2 and therefore does not exceed the threshold, the incremented recursion counter is set to the created internal invocation request as recursion counter with value 2 818, and the request is used by the managed environment 100 to create a second execution environment (instance 2) for the second requested execution. This execution environment also maintains a recursion counter storage 813, which reads the received recursion counter from an incoming invocation request 122a, stores the value of the recursion counter and injects a recursion counter parameter using the stored value into outgoing invocation requests 104a. In this case, execution environment instance 2 issues an invocation request containing a recursion counter parameter 820 with value 2. The request is forwarded 821 to the invocation manager 109a, where the recursion protection manager 800 reads the recursion counter value from the received invocation request, increments it by 1 and the compares the incremented recursion counter with the recursion threshold 802. As the recursion count now exceeds the recursion threshold 802, invocation manager suppresses 822 the subsequent recursive execution request. In addition, the invocation manager may also log the detected recursion or may otherwise notify an operator of the managed execution environment 100, or a vendor of the affected application, about the observed undesired recursion.

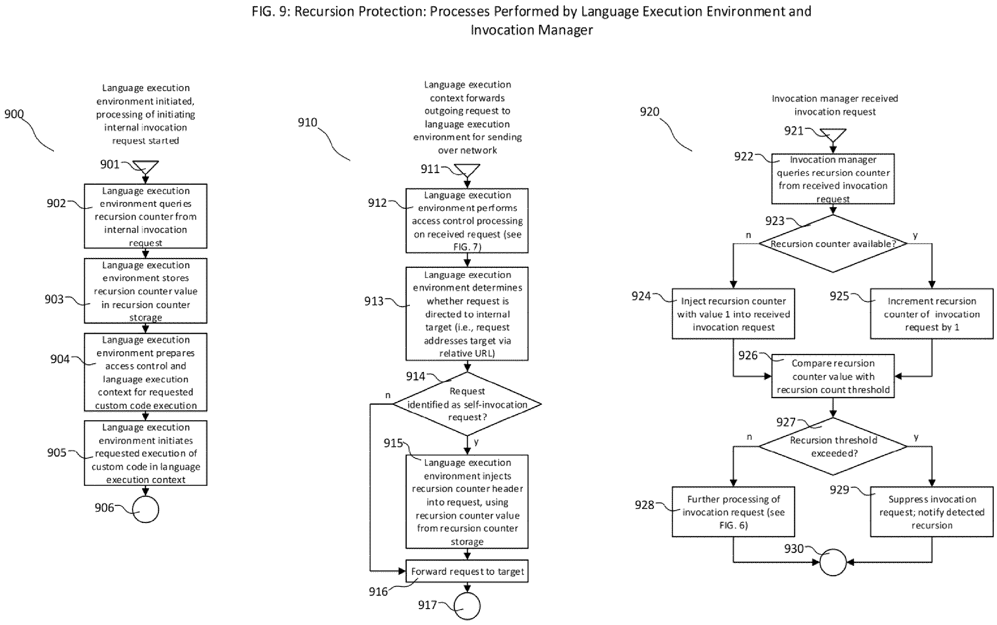

Referring now to FIG. 9, which provides flow charts of processes performed by language execution environment 143 and invocation manager 109a to implement recursion protection functionality. Processing of the language execution environment on receipt of an internal invocation request 122a, and on receipt of an outgoing invocation request 104a from the language execution context is shown in flow charts 900 and 910. Processing performed by the invocation manager 109a, on receipt of invocation requests 104 or 104a is shown in flow chart 920.

Processing 900 of an incoming internal invocation request 122a by language execution environment 143 starts with step 901, when an internal invocation request 122a is received.

Following step 902 may query the value of the recursion counter 812 from the received internal invocation request 122a and subsequent step 903 may store the value of the recursion counter in the recursion counter storage 813 of the access control module 144a of the language execution environment 143.

Next, step 904 may prepare access control 144a and language execution context 141 for the requested execution of custom code, and step 905 may then start the requested execution of custom code in the prepared language execution context. Steps 904 and 905 may operate as already described before, e.g., in FIG. 5. Initiating the desired custom code execution may include providing portions of the received internal invocation request for the execution of the custom code. The language execution environment 143 may remove the recursion counter parameter 812 from the parameters that are forwarded to the language execution context for the execution of custom code, to hide presence of recursion detection and an actual recursion count value from custom code execution. Step 904 may in addition verify if the received internal invocation request contains access token data, as e.g., injected by access control processing (see e.g., FIG. 7, step 703) for the code execution that sent the invocation request leading to the recursive self-invocation, and in this case, remove the access token data from the internal invocation request, to avoid that the access token data is revealed to executing custom code.

The process then ends with step 906.

The processing 910 performed by language execution environment 143 on receipt of an outgoing invocation request from a language execution context executing custom code starts with step 911, when an outgoing request is received from the language execution context 141.

Following step 912 may perform access control processing of the received request, as already shown in FIG. 7.

Afterwards, step 913 may determine whether the received outgoing request is directed to a target that is internal to the managed environment. Step 913 may e.g., analyze the received request to determine whether it absolutely or relatively addresses its target, as a relatively addressed request target is located within the managed environment. Step 913 may perform analyses as already described for step 701 of the flow chart shown in FIG. 7. Goal of step 913 is to determine whether the outgoing request is potentially a recursive self-invocation request. In some embodiments, determining that the outgoing request addresses its target relatively, which indicates that the target is within the managed environment 100 is sufficient.

In other embodiments, step 913 may in addition determine whether the target of the outgoing request is an invocation manager 109a and only indicate that the outgoing request is a recursive self-invocation request if it is relative, and its target is an invocation manager.

In still other embodiments, step 913 may in addition compare a parameter or other portion of the outgoing request that identifies the custom code for which execution code is requested with execution code 124 identification data of the internal invocation request 122a that initiated the custom code execution that created the outgoing request. Those embodiments may only indicate a self-invocation request if the request is relative, targets an invocation manager 109a and in addition requests an additional execution of the same custom code that is currently executing and that sent the outgoing request.

Following decision step 914 may then evaluate whether step 914 indicated that the received request is a self-invocation request and proceed with step 916, which forwards the request to its target if the request is no self-invocation request. If otherwise the request was identified as self-invocation request, step 915 is executed, in which the language execution request inserts the recursion counter 814 into the outgoing request. As an example, step 915 may add a header parameter with a parameter name identifying the parameter as recursion counter parameter to the header of the outgoing request. The value of the recursion counter parameter may be set to the recursion counter value stored in the recursion counter storage 813 of the access control module 144a.

Afterwards, step 917 is executed, which forwards the request to its target and the process then ends with step 917.

Flow chart 920 describes the recursion protection related processing performed by invocation manager 109a and starts with step 921 when the invocation manager 109a receives an invocation request, either from an external source (invocation request variant 104), or from an already ongoing execution of custom code within the managed execution environment 100 (invocation request variant 104a).

Following step 922 may then query the recursion counter (see element 814 or 820 in FIG. 8) from the received invocation request. Note that in case the invocation request is received from an external source (invocation request variant 104), no recursion counter is available in the request.

Decision step 923 then continues with step 924 if no recursion counter was available, which injects a recursion counter with counter value 1 into the received request. Step 924 may e.g., add a corresponding request header to the received request. If otherwise a recursion counter was available in the invocation request, step 925 is executed, which increments value of the recursion counter contained in the request by 1.

Step 926 is executed after step 924 or 925, which compares the value of the recursion counter with the recursion count threshold 802 stored in the configuration area 801 of the recursion protection manager 800.

Following decision step 927 then continues the process with step 928 if the recursion counter does not exceed the recursion threshold. Step 928 may continue processing the incoming invocation request as described in FIG. 6. If otherwise the recursion counter exceeds the threshold the process continues with step 929, which suppresses the received invocation request and notifies the detected undesired recursion to an operator of the monitored execution environment 100, or to a vendor of the custom code that caused the undesired recursive invocations. After step 928 or 929 the process ends with step 930.

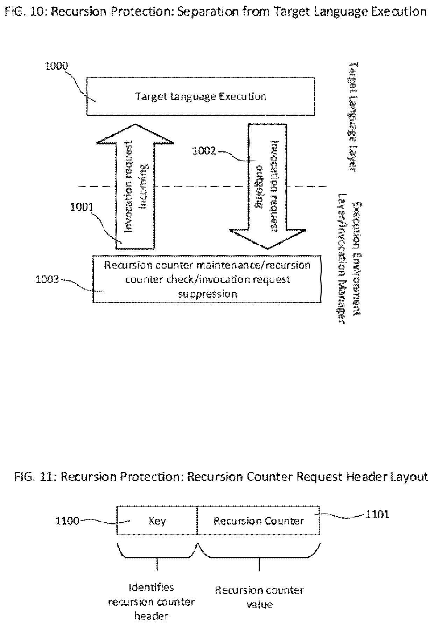

Referring now to FIG. 10, which illustrates the concept of reliably separating the execution of custom code in a target language execution layer from the maintenance of a recursion counter and the evaluation of this recursion counter to detect and prevent undesired recursive invocations in a native execution environment management layer. FIG. 10 shows a target language execution layer 1000, which executes custom code in response to the receipt of an incoming invocation request 1001, which it receives from an execution environment management layer 1003, which also maintains a recursion counter and manages/implements recursion protection by suppressing undesired self-invocations of custom code, which may be caused by outgoing invocation requests 1003 issued by custom code execution 1000 in a target language execution layer. FIG. 10 shows that execution of custom code and implementation and execution of recursion protection are strictly separated from each other. Executing custom code is not aware of an operating recursion protection mechanism, or the maintenance and evaluation of a recursion counter.

Referring now to FIG. 11, which conceptually shows the structure of a recursion counter parameter, which may be included into invocation requests in form of a header parameter. Generically, such a header parameter consists of a key 1100 and a recursion counter value 1101. The key 1100 of the recursion counter header parameter may set to be unique within the header parameters contained in an invocation request. Depending on the requirements for the recursion protection mechanism, the key may be a simple constant name, if only basic recursion protection is required that operates equally for each execution request of custom code. If variable behavior is desired, e.g., for different tenants/users of a managed environment, or for different code bundles for which execution is requested, then an identifier for the tenant/user and for the to be executed code bundle may be added to the key. In such variants, different recursion thresholds may be applied for different tenants/users or code bundles. If invocation requests may be distributed between different managed environments, also an identifier identifying the individual managed environment in which an execution is performed may be added to the recursion counter that this managed environment creates/manages. This enables the recursion protection mechanism of a specific managed environment 100 to identify and ignore recursion counters set by other managed environments.

In some embodiments also the recursion counter value 1101 may be configured to contain not only the actual recursion count, but also other data that may be used for plausibility checks performed by the recursion protection mechanism. As an example, next to the actual recursion count, also a time stamp for the time when the first execution of the monitored recursion was performed. It can be assumed that recursive executions occur in a relatively short period of time, therefore the recursion protection mechanism may compare this first execution time stamp with the current time and ignore a recursion counter if the difference between recursion start and current time exceeds a certain threshold.

The techniques described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A managed execution environment, comprising:
- an internal invocation request for executing code in the managed execution environment, where the internal invocation request includes code for execution and the code for execution is written in a scripting language;
- an execution engine configured to receive and process the internal invocation request, where the code for the execution engine resides in a first memory space of the managed execution environment and is implemented by a programming language that does not permit changes to the first memory space;
- wherein, upon receipt of the internal invocation request, the execution engine creates an execution context for the code for execution and starts execution of the code for execution in the execution context, where creating the execution context includes creating a second memory space for execution of the code, such that the execution context permits changes to code contained in the second memory space; and
- wherein, upon completion of the execution of the executable code, the execution engine discards the execution context.

2. The managed execution environment of claim 1, wherein the execution engine is configured to receive a second internal invocation request and creates another execution context in response to receiving the second internal invocation request, where the execution context for the second internal invocation request differs from the execution context for the internal invocation request.

3. The managed execution environment of claim 1 or 2, further comprising an invocation manager and a plurality of platform instances, where each of the plurality of platform instances provides functionality or data for different system users and the invocation manager is configured to receive an invocation request and operates to resolve one of the plurality of platform instances to which the invocation requests pertains to.

4. The managed execution environment of claim 3, wherein the invocation request includes identifying information for a given system user and the invocation manager maps the identifying information for the given system user to an address for a platform instance associated with the given system user.

5. The managed execution environment of any of the preceding claims, wherein the internal invocation request further includes one or more access tokens, and the execution engine configures an access control module using the one or more access tokens.

6. The managed execution environment of claim 5, wherein the access control module is configured to receive a resource access request for a given resource from the code and directs the resource access request to the given resource.

7. The managed execution environment of claim 6, wherein, upon receiving the resource access request, the access control module determines whether the resource access request includes a network address for the given resource.

8. The managed execution environment of claim 7, wherein, in response to a determination that a network address for the given resource is absent from the resource access request, the access control module injects the one or more access tokens into the resource access request.

9. The managed execution environment of claim 7 or 8, wherein, in response to a determination that a network address for the given resource is absent from the resource access request, the access control module redirects the resource access request to an instance of the given resource, where the redirection includes adding an address for a platform instance to the resource access request.

10. The managed execution environment of any of claims 7 to 9, wherein, in response to a determination that a network address for the given resource is present in the resource access request, the access control module verifies whether the given resource is on an allow list and denies the resource access request in absence of the given resource on the allow list.

11. A method for managing an execution environment, comprising:
- receiving, by an execution engine, an internal invocation request for executing code in a managed execution environment, where the internal invocation request includes code for execution and the code for execution is written in a scripting language, wherein the code for the execution engine resides in a first memory space of the managed execution environment and is implemented by a programming language that does not permit changes to the first memory space;
- upon receipt of the internal invocation request, creating, by the execution engine, an execution context for the code for execution and starting execution of the code for execution in the execution context, where creating the execution context includes creating a second memory space for execution of the code, such that the execution context permits changes to code contained in the second memory space; and
- upon completion of the execution of the executable code, discarding the execution context by the execution engine.

12. The method of claim 11, further comprising providing a plurality of platform instances, where each of the plurality of platform instances provides functionality or data for different system users; and receiving, by an invocation manager, an invocation request and operating to resolve one of the plurality of platform instances to which the invocation requests pertains to.

13. The method of claim 11 or 12, wherein the internal invocation request further includes one or more access tokens, and further comprises configuring, by the execution engine, an access control module using the one or more access tokens.

14. The method of claim 13, further comprising receiving, by an access control module, a resource access request for a given resource from the code and directing the resource access request to the given resource.
